**Europäisches Patentamt**

**European Patent Office**

**Office européen des brevets**

(19)

(11) **EP 1 067 232 A1**

(12) **DEMANDE DE BREVET EUROPEEN**

(43) Date de publication:
**10.01.2001 Bulletin 2001/02**

(51) Int Cl.⁷: **D06F 37/30**

(21) Numéro de dépôt: **00401917.0**

(22) Date de dépôt: **04.07.2000**

| | |
|---|---|
| (84) Etats contractants désignés:<br>**AT BE CH CY DE DK ES FI FR GB GR IE IT LI LU MC NL PT SE**<br>Etats d'extension désignés:<br>**AL LT LV MK RO SI**<br><br>(30) Priorité: **09.07.1999 FR 9908957**<br><br>(71) Demandeur: **CIAPEM**<br>**F-69007 - Lyon (FR)** | (72) Inventeurs:<br>• **Girin, Lionel, Thomson-CSF P.I. Dépt. Brevets 94117 Arcueil Cedex (FR)**<br>• **Filley, Thierry, Thomson-CSF P.I. Dépt. Brevets 94117 Arcueil Cedex (FR)**<br>• **Vivion, Daniel, Thomson-CSF P.I. Dépt. Brevets 94117 Arcueil Cedex (FR)**<br><br>(74) Mandataire: **Chaverneff, Vladimir et al Thomson-CSF Propriété Intellectuelle, 13, Avenue du Président Salvador Allende 94117 Arcueil Cédex (FR)** |

(54) **Machine à laver et/ou à sécher le linge équipée d'une régulation de vitesse de tambour**

(57)    La présente invention concerne une machine à laver et/ou à sécher le linge équipée d'une régulation de vitesse de tambour.

La machine comporte au moins un tambour (1) placé dans une cuve (2) et entraîné par un moteur (5) par l'intermédiaire d'une poulie (4) et d'une courroie de transmission (6), des moyens (8) de commande du moteur (5) d'entraînement du tambour (1), un capteur (21) et un codeur (22). Le codeur (22) est solidaire mécaniquement de l'arbre de rotation (3) du tambour. Le capteur (21) est placé sur une partie fixe (23) et disposé en regard du codeur (22), le codeur (22) envoyant un signal codé au capteur. Ce signal codé est représentatif de la vitesse de rotation du tambour (1), le capteur transmettant le signal aux moyens (8) de commande du moteur.

L'invention s'applique notamment pour des machines qui exigent une grande fiabilité au niveau de la régulation de vitesse du tambour tout en étant économique à mettre fabriquer.

FIG.2

Printed by Jouve, 75001 PARIS (FR)

EP 1 067 232 A1

## Description

La présente invention concerne une machine à laver et/ou à sécher le linge équipée d'une régulation de vitesse de tambour. Elle s'applique notamment pour des machines qui exigent une grande fiabilité au niveau de la régulation de vitesse du tambour tout en étant économique à fabriquer.

Une machine à laver le linge comporte un tambour placé dans une cuve remplie d'eau. Le linge est placé dans le tambour qui tourne à l'intérieur de la cuve autour d'un axe de rotation généralement horizontal. Le tambour est entraîné en rotation par un moteur et par l'intermédiaire d'une courroie de transmission. Un cycle de lavage comporte plusieurs phases au cours desquelles le tambour est entraîné en rotation à des vitesses différentes. En particulier, en phase d'essorage, la vitesse de rotation du tambour peut aller très au-delà de 1000 tours par minutes. La vitesse de rotation du tambour peut aussi dépendre de la nature du linge. Il apparaît donc que la vitesse du tambour doit être contrôlée avec une certaine précision. Il ne faut par exemple pas laisser diverger la vitesse vers de grandes valeurs en phase d'essorage, notamment pour des raisons de sécurité. De même, il ne faut par exemple pas imposer à un linge délicat une vitesse de rotation trop élevée, notamment dans une phase de séchage, d'une machine lavante et/ou séchante. La fiabilité de la vitesse du tambour impose en particulier une mesure fiable de la vitesse de rotation du tambour. En effet, la vitesse de rotation du moteur d'entraînement du tambour est régulée en fonction de cette mesure. La régulation s'effectue par exemple au moyen d'un microcontrôleur qui détermine la vitesse de commande du moteur en fonction de la vitesse du tambour objective.

Une solution connue pour mesurer la vitesse du tambour d'une machine à laver et/ou sécher le linge utilise un générateur tachymétrique solidaire de l'arbre du moteur d'entraînement du tambour. Ce générateur envoie à des moyens de commande de la vitesse de rotation du moteur un signal par exemple sensiblement sinusoïdal directement proportionnel en fréquence et en tension à la vitesse de l'arbre du moteur. La vitesse de rotation du moteur reflète la vitesse de rotation du tambour dans la mesure où il est entraîné par le moteur via une courroie de transmission. La vitesse de rotation du moteur est commandée par des moyens à base de microprocesseur ou microcontrôleur. Ces moyens calculent la commande de vitesse à appliquer en fonction de la vitesse mesurée. Le calculateur doit notamment prendre en compte le rapport de transmission entre le tambour et l'arbre du moteur. En effet, le moteur tourne généralement à une vitesse de rotation nettement supérieure à celle du tambour. Le dimensionnement d'un moteur est lié à un paramètre principal qui est le couple maximum qu'il devra fournir pour entraîner le tambour. Il faut donc utiliser un système d'entraînement, généralement par courroie, dont le but est notamment de diminuer la valeur du couple moteur à fournir pour entraîner le tambour. La puissance Pt nécessaire à l'entraînement du tambour est donnée par la relation suivante :

$$Pt = Ct \times n_t \qquad (1)$$

où Ct est le couple résistant à l'axe du tambour et $n_t$ est la vitesse de rotation du tambour.

La puissance Pm que doit alors développer le moteur est donnée par la relation suivante :

$$Pm = Cm \times n_m \qquad (2)$$

où Cm est le couple moteur et $n_m$ est la vitesse de rotation du moteur.

Les puissances Pt et Pm sont égales. Le paramètre qui permet de faire varier le couple moteur est le rapport des vitesses $Rt = n_m / n_t$, ce rapport étant aussi appelé rapport de transmission.

Selon une architecture logicielle standard qui tend à se développer, le calculateur des moyens de commande du moteur comporte en mémoire un sous-programme qui gère la régulation de vitesse de rotation du tambour, ce sous-programme tient compte notamment du rapport de transmission entre le moteur et le tambour. Les moyens de commande comportent par ailleurs d'autres sous-programmes qui gèrent tous les aspects des phases de lavage et/ou de séchage.

Il existe un grand nombre de moteurs disponibles sur le marché des moteurs susceptibles d'équiper une machine à laver et/ou à sécher le linge. Le rapport de transmission peut donc être a priori quelconque. Il faut donc modifier le sous-programme de régulation de vitesse du tambour en fonction de chaque moteur. Cela n'est pas économique, et par ailleurs source d'erreurs. Il serait préférable d'implanter dans le calculateur des moyens de commande du moteur un sous-programme adapté à l'ensemble des moteurs.

Par ailleurs, l'information de mesure donnée par le générateur tachymétrique est partiellement exacte en ce qui concerne la vitesse du tambour. En effet, la vitesse de rotation du tambour ne reflète pas exactement la vitesse de rotation du moteur à cause de perturbations dues à la transmission par la courroie, ces perturbations ne pouvant pas être prédéterminées facilement. La transmission par courroie entre donc en compte dans la mesure de la vitesse. En particulier, la vitesse du tambour est aussi fonction des variations du rapport de transmission. Ces variations sont notamment dues :

- aux dispersions mécaniques des éléments composant cette transmission qui affectent la valeur propre du rapport de transmission ;
- au glissement de la courroie sur les poulies qui varie lui aussi en fonction du vieillissement, de la charge et de la vitesse, ces paramètres étant difficiles à prendre en compte dans les algorithmes de régulation.

Un autre inconvénient provient du fait que le rotor du générateur tachymétrique est normalement fixé sur l'arbre du moteur et de ce fait est soumis au champ électromagnétique intense du moteur, ce qui induit de forts parasites du signal. Il en résulte un bruit de fond important qui gêne considérablement l'exploitation du signal pour la régulation en basse vitesse du tambour. Cette vitesse est très vite limitée lorsque le rapport de transmission entre le moteur et le tambour est faible, par exemple de l'ordre de 10, car la tension délivrée par le générateur tachymétrique du moteur étant faible, le bruit devient très important par rapport au signal.

Un autre inconvénient important est qu'il est pratiquement impossible de détecter le fait que la courroie est absente, notamment cassée ou déjantée. De même, lorsque le tambour est bloqué, il peut se produire un patinage de la poulie motrice sur la courroie qui va détruire cette dernière sans que les moyens de régulation soit en mesure de détecter ce type de défaillance. En général, pour résoudre ce problème, il faut utiliser des valeurs de tension et des types de courroie surdimensionnés, ce qui pénalise économiquement les machines.

Un but de l'invention est de pallier les inconvénients précités, et notamment de permettre l'implantation d'un programme de régulation de vitesse unique adapté à l'ensemble des moteurs d'entraînement des tambours. A cet effet, l'invention a pour objet une machine à laver et/ou à sécher le linge, telle que décrite par la revendication 1.

L'invention a pour principaux avantages qu'elle permet une mesure fiable de la vitesse de rotation du tambour, qu'elle permet une plus grande sûreté de fonctionnement, qu'elle permet de déterminer la position angulaire du tambour, qu'elle permet de déterminer le sens de rotation du tambour et qu'elle est économique.

D'autres caractéristiques et avantages de l'invention apparaîtront à l'aide de la description qui suit faite en regard de dessins annexés qui représentent :

- la figure 1, un exemple de dispositif de régulation de vitesse du tambour d'une machine à laver et/ou sécher le linge selon l'art antérieur ;
- la figure 2, un exemple de réalisation possible d'un dispositif selon l'invention.

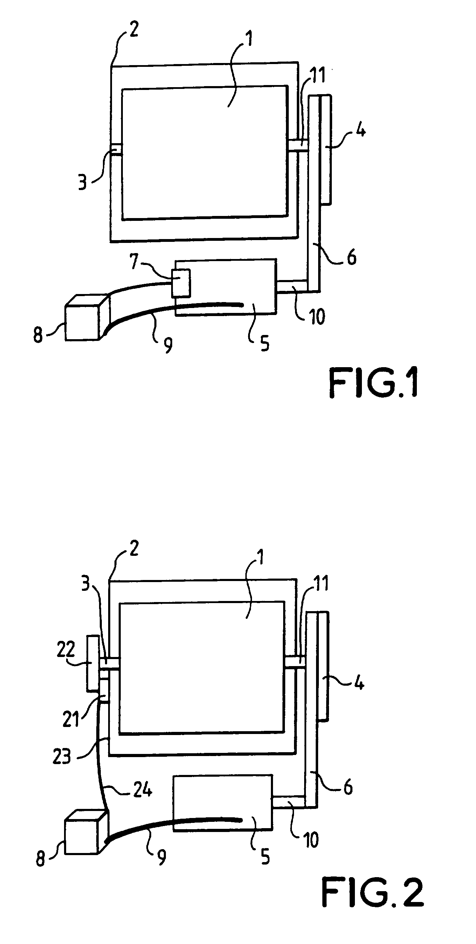

La figure 1 présente, sous forme schématique, un exemple de machine à laver équipée d'un système de régulation de vitesse d'un tambour selon l'art antérieur. Un tambour 1 est placé dans une cuve 2. Le tambour 1 est solidaire mécaniquement d'un arbre 11 luimême solidaire mécaniquement d'une poulie 4. Cette poulie est placée à l'extérieur de la cuve 2 de sorte que l'arbre 11 traverse la paroi latérale de la cuve. Dans le cas d'une machine lavante, des joints d'étanchéité sont prévus au niveau du passage de l'arbre à travers la cuve. La poulie 4 est entraînée en rotation par un moteur 5, par l'intermédiaire d'une courroie de transmission 6. La poulie 4 est de diamètre supérieur au diamètre de l'arbre 10 du moteur qui entraîne la courroie de sorte que le tambour tourne à une vitesse de rotation inférieure à celle du moteur. Le rapport de transmission est défini par le rapport entre les diamètres de la poulie 4 et de l'arbre 10 du moteur. Un générateur tachymétrique 7, dont le rotor est fixé sur l'arbre du moteur 5 envoie un signal représentatif de la vitesse de rotation du moteur à des moyens 8 de commande de la vitesse de rotation du moteur. Ces moyens 8 comportent par exemple un microcontrôleur qui lie le signal de vitesse envoyé par le générateur tachymétrique, en fonction duquel il détermine la vitesse de rotation du moteur. Pour déterminer cette vitesse, le microcontrôleur prend aussi en compte la phase de lavage en cours mais aussi le rapport de transmission entre l'arbre de transmission 10 du moteur et la poulie 4. Un sous-programme est donc nécessaire en fonction de chaque type de moteur, puisque le rapport de transmission peut dépendre de chacun de ces types. Il n'est donc pas possible d'avoir un programme standard utilisable pour tous les types de moteurs. Les moyens 8 de commande du moteur comportent par ailleurs des interfaces, notamment à base de transistors ou de thyristors, qui transforment le signal de commande issu du microcontrôleur en un signal de puissance apte à commander la vitesse du moteur 5 par une liaison électrique 9.

La transmission par courroie influe la mesure de la vitesse prise en compte par les moyens de commande 8 du moteur. Les variations du rapport de transmission affectent notamment cette mesure. En particulier, ces variations sont dues aux dispersions mécaniques des éléments composant cette transmission qui affectent la valeur propre du rapport de transmission. Ces variations sont encore dues au glissement de la courroie sur les poulies qui varie lui aussi en fonction du vieillissement, de la charge et de la vitesse, ces paramètres étant difficiles à prendre en compte dans les algorithmes de régulation. Par ailleurs, le rotor du générateur tachymétrique est normalement fixé sur l'arbre du moteur et de ce fait est soumis au champ électromagnétique intense du moteur, ce qui induit beaucoup de parasites du signal. Il en résulte un bruit de fond important qui gêne considérablement l'exploitation du signal pour la régulation en basse vitesse du tambour. Cette vitesse est très vite limitée lorsque le rapport de transmission, défini par la différence entre le diamètre de la poulie 4 et le diamètre de l'arbre 10 du moteur, est faible, par exemple lorsque ce rapport est de l'ordre de 10. En effet, la tension délivrée par le générateur tachymétrique du moteur étant alors faible, le bruit devient très important par rapport au signal. Par ailleurs, il est pratiquement impossible de détecter le fait que la courroie est absente, notamment cassée ou déjantée.

La figure 2 présente, toujours sous forme schématique, un exemple de réalisation possible d'une machine selon l'invention. Le tambour 1 est entraîné par le moteur 5 par l'intermédiaire de la poulie 4 et de la courroie de transmission 6. Le système de régulation de la vitesse de rotation du tambour comporte au moins des moyens 8 de commande du moteur 5 d'entraînement du tambour 1 d'une machine à laver et/ou à sécher le linge, un capteur 21 et un codeur 22. Les moyens de commande du moteur sont par exemple ceux décrits relativement à la figure 1.

Le codeur est solidaire mécaniquement de l'arbre de rotation du tambour 1. A cet effet, l'arbre 3 du tambour, opposé à la poulie 4, se prolonge par exemple au-delà de la paroi latérale 23 de la cuve. A l'extrémité de cet arbre 3, à l'extérieur de la cuve est par exemple fixé le codeur 22. Le codeur pourrait être fixé sur l'arbre 11 solidaire de la poulie 4, ou même fixé directement sur cette dernière. Cependant, pour des raisons d'encombrement, il peut être préférable de disposer le codeur 22 du côté opposé à celui de la poulie 4. Le codeur 22 tourne à la même vitesse que le tambour 1. Dans un mode de réalisation où le codeur n'est pas rapporté, il pourrait par exemple être partie intégrante de la poulie 4 d'entraînement du tambour.

Le capteur 21 est placé sur une partie fixe par rapport à la cuve, par exemple sur la paroi 23 de la cuve. Le capteur 21 est disposé en regard du codeur 22. Le codeur 22 envoie un signal codé au capteur, ce signal codé étant représentatif de la vitesse de rotation du tambour. Ce signal peut avoir une forme optique, magnétique et ou électrique par exemple. Le capteur transmet le signal aux moyens 8 de commande du moteur, par l'intermédiaire par exemple d'une liaison électrique 24. Le signal est notamment pris en compte par le calculateur ou microcontrôleur des moyens de commande 8. Un sous-programme de régulation peut notamment être implanté dans le calculateur. Ce sous-programme régule la vitesse de rotation du moteur 5 d'entraînement du tambour 1 de manière à ce que la vitesse de rotation du tambour suive une consigne donnée, par ailleurs mémorisée et dépendant de la phase de lavage ou de séchage.

Le codeur peut être par exemple un disque comportant des secteurs magnétiques répartis de façon angulaire de façon uniforme ou non, de polarités magnétiques différentes. Le capteur est alors par exemple un élément réagissant aux différentes polarités magnétiques, tel qu'une sonde à effet Hall par exemple. Le signal transmis par le capteur aux moyens de commande est dans ce cas une suite de signaux pulsés dont la fréquence est représentative de la vitesse de rotation du codeur 22, et donc du tambour 1. Un signal pulsé correspondant au passage d'un secteur en regard du capteur. Le calculateur des moyens de commande du moteur définit le temps entre chaque impulsion reçue et déduit la fréquence du signal. Ayant en mémoire les paramètres du codeur, c'est à dire notamment la distance angulaire entre chaque secteur, ou bien le nombre de secteurs angulaires que comporte le codeur, le calculateur est alors en mesure de déterminer la vitesse de rotation du codeur.

Le codeur 22 peut par exemple être un disque métallique comportant des trous ou des secteurs non détectables par effet magnétique. Le capteur 21 peut alors par exemple être un élément capable de réagir à la présence ou non de matière en face de lui. Le capteur peut encore être ici du type à effet Hall. Le capteur transmet aux moyens de commande un signal pulsé de fréquence représentative de la vitesse de rotation du tambour. Une pulsation correspond par exemple à un trou.

Le codeur 22 peut être un disque à trous ou à secteurs réfléchissant. Le passage des trous ou des secteurs réfléchissant en face du capteur 21 est alors par exemple repéré par celui-ci, qui est un capteur optique.

Les différents exemples de codeurs précités peuvent être utilisés dans le cas où ils sont rapportés, mais aussi dans les cas où ils sont des parties intégrantes de la poulie 4 d'entraînement du tambour. Dans ce dernier cas, un gain de place et une économie de réalisation sont avantageusement obtenues. En ce qui concerne le gain de place, un codeur intégré à la poulie 4 n'exige aucun espace ou place supplémentaire le volume qu'il occupe est confondu avec celui de la poulie.

En fonction de la mesure de la vitesse de rotation du tambour fournie par le codeur et son capteur associé, et en fonction par exemple de la phase de lavage ou de séchage, les moyens de commande 8 transmettent un ordre de vitesse au moteur 5 via une liaison électrique 9.

Avantageusement, l'invention permet en outre de détecter la position angulaire d'un tambour de lave-linge ou de sèche-linge à chargement par le dessus. De cette fonction découle la faculté de positionner le portillon en face de l'ouverture du lave-linge et d'arrêter alors la rotation du tambour. Ceci évite à l'utilisateur(trice) du lave-linge ou du sèche-linge d'avoir à amener le portillon manuellement en face de l'ouverture, opération qui est non aisée et désagréable à cause de la rugosité de la surface du tambour.

En exemple de description on se réfère au cas d'un système de mesure électromagnétique.

Pour réaliser cette fonction la cible 22 comporte des secteurs aimantés répartis en périphérie avec un ou plusieurs secteurs manquants dont la position est indexée par rapport au portillon du tambour.

Le signal transmis par le capteur 21 va, à cause de ces manques, comporter des singularités. Le système de pilotage du moteur 8 qui analyse la fréquence du signal du capteur 21 est capable de détecter ces singularités et par conséquent de connaître la position du tambour. Dans ce cas, il est ensuite facile d'arrêter la commande du moteur lorsque le portillon se situe en face de l'ouverture du lave-linge.

Le ou les secteurs manquants peuvent être en décalage par rapport à la position du portillon. En effet, lorsque la particularité est détectée, le système peut compter un nombre défini de signaux avant d'arrêter la commande du moteur. Ce temps entre la détection de la singularité et le moment où le tambour est arrêté peut correspondre à un ralentissement géré du tambour de façon à faciliter le positionnement du portillon en limitant le risque de dépassement.

De plus, si plusieurs secteurs manquants sont positionnés, le système peut, en analysant les différentes singularités, déterminer le sens de rotation du tambour. Cette information, peut avantageusement être utilisée pour une gestion plus précise du cycle de lavage ou d'essorage. Il est à noter que ce type de détection peut facilement être utilisé avec les autres types de capteurs cités par ailleurs.

Un mode de réalisation est décrit précédemment avec des secteurs aimantés manquants. En fait, la position angulaire du tambour est notamment déterminée par le repérage d'une irrégularité. Au lieu de retirer un secteur, il est possible de créer une irrégularité dans la disposition angulaire des secteurs et de repérer la position du tambour par rapport à cette irrégularité. En d'autres termes, les moyens 8 de commande du tambour peuvent déterminer la position angulaire du tambour par la détermination de la position angulaire de l'irrégularité.

L'invention s'applique à tous types de machines à laver et/ou à sécher. Des même moyens de commande, notamment un même sous-programme standard de régulation de vitesse peut être appliqué à tous types de moteurs d'entraînement du tambour. Des économies d'industrialisation des machines peuvent ainsi être réalisées. Par ailleurs l'invention permet de pallier les inconvénients précités. En particulier la mesure de vitesse de rotation du tambour est fiable car elle n'est pas perturbée par la transmission de la courroie. La mesure donne de plus une information exacte de l'état du tambour, en permettant notamment de savoir s'il est bloqué ou s'il n'est plus entraîné par la courroie de transmission. L'invention permet de ce fait une plus grande sûreté de fonctionnement.

**Revendications**

1. Machine à laver et/ou à sécher le linge, caractérisée en ce qu'elle comporte au moins un tambour (1) placé dans une cuve (2) et entraîné par un moteur (5) par l'intermédiaire d'une poulie (4) et d'une courroie de transmission (6), des moyens (8) de commande du moteur (5) d'entraînement du tambour (1), un capteur (21) et un codeur (22), le codeur (22) étant solidaire mécaniquement de l'arbre de rotation (3) du tambour, le capteur (21) étant placé sur une partie fixe (23) et disposé en regard du codeur (22), le codeur (22) envoyant un signal codé au capteur, ce signal codé étant représentatif de la vitesse de rotation du tambour (1), le capteur transmettant le signal aux moyens (8) de commande du moteur.

2. Machine selon la revendication 1, caractérisée en ce que l'arbre (3) du tambour, opposé à la poulie (4), se prolonge au-delà de la paroi latérale (23) de la cuve, à l'extrémité de cet arbre (3) étant fixé le codeur (22).

3. Machine selon l'une quelconque des revendications précédentes, caractérisée en ce que le capteur (21) est fixé sur la paroi (23) de la cuve (2).

4. Machine selon l'une quelconque des revendications précédentes, caractérisée en ce que les moyens (8) de commande du moteur (5) comportent des moyens de régulation de la vitesse de rotation du moteur (5) de manière à ce que la vitesse de rotation du tambour (1) suive une consigne donnée, mémorisée et dépendant de la phase de lavage ou de séchage.

5. Machine selon l'une quelconque des revendications précédentes, caractérisée en ce que le codeur (22) est un disque comportant des secteurs magnétiques répartis angulairement de façon uniforme ou non, le capteur (21) étant un élément réagissant aux différentes polarités magnétiques, le signal transmis par le capteur (21) aux moyens de commande (8) étant une suite de signaux pulsés dont la fréquence est représentative de la vitesse de rotation du tambour (1).

6. Machine selon l'une quelconque des revendications 1 à 4, caractérisée en ce que le codeur (22) est un disque métallique comportant des trous ou des secteurs non détectables par effet magnétique, le capteur (21) étant un élément capable de réagir à la présence ou non de matière en face de lui.

7. Machine selon l'une quelconque des revendications 1 à 4, caractérisé en ce que le codeur (22) est un disque à trous ou à secteurs réfléchissant, le capteur (21) étant un capteur optique.

8. Machine selon l'une quelconque des revendications 5 à 7, caractérisée en ce que les secteurs ne sont pas disposés régulièrement, les moyens (8) de commande du moteur déterminant la position du tambour par la détermination angulaire d'une irrégularité dans la disposition des secteurs.

9. Machine selon la revendication 8, caractérisée en ce que les secteurs étant répartis régulièrement, au moins un secteur manque.

10. Machine selon l'une quelconque des revendications précédentes, caractérisé en ce que le codeur est partie intégrante de la poulie (4) d'entraînement du tambour.

FIG.1

FIG.2

**Office européen des brevets**

**RAPPORT DE RECHERCHE EUROPEENNE**

Numéro de la demande

EP 00 40 1917

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 33 06 052 A (STANDARD ELECTRIC) 30 août 1984 (1984-08-30) * abrégé; revendications; figure 1 * --- | 1,3-6,10 | D06F37/30 |
| X | FR 2 454 625 A (G. BAUKNECHT GMBH) 14 novembre 1980 (1980-11-14) * page 1 - page 2; revendication 1; figures 1,2 * --- | 1,4,7,10 | |
| A | FR 2 588 581 A (CIAPEM) 17 avril 1987 (1987-04-17) * revendications 1,4,5; figure * --- | 1,4 | |
| A | FR 2 655 065 A (BOSCH-SIEMENS HAUSGERÄTE GMBH) 31 mai 1991 (1991-05-31) * revendications; figures * ----- | 1,8,10 | |

| | DOMAINES TECHNIQUES RECHERCHES (Int.Cl.7) |
|---|---|
| | D06F |

Le présent rapport a été établi pour toutes les revendications

| Lieu de la recherche | Date d'achèvement de la recherche | Examinateur |
|---|---|---|
| LA HAYE | 18 octobre 2000 | Courrier, G |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................................
& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**                    EP 00 40 1917

La présente annexe indique les membres de la famille de brevets relatifs aux documents brevets cités dans le rapport de recherche européenne visé ci–dessus.
Lesdits members sont contenus au fichier informatique de l'Office européen des brevets à la date du
Les renseignements fournis sont donnés à titre indicatif et n'engagent pas la responsabilité de l'Office européen des brevets.

18-10-2000

| Document brevet cité au rapport de recherche | | Date de publication | Membre(s) de la famille de brevet(s) | | Date de publication |
|---|---|---|---|---|---|
| DE 3306052 | A | 30-08-1984 | AUCUN | | |
| FR 2454625 | A | 14-11-1980 | DE | 2915815 A | 06-11-1980 |
| | | | ES | 490500 D | 01-11-1980 |
| | | | ES | 8100375 A | 16-01-1981 |
| | | | IT | 1141564 B | 01-10-1986 |
| FR 2588581 | A | 17-04-1987 | AUCUN | | |
| FR 2655065 | A | 31-05-1991 | DE | 4037868 A | 29-05-1991 |
| | | | ES | 2026381 A | 16-04-1992 |
| | | | IT | 1244158 B | 08-07-1994 |

EPO FORM P0460

Pour tout renseignement concernant cette annexe : voir Journal Officiel de l'Office européen des brevets, No.12/82